Europäisches Patentamt

European Patent Office

Office européen des brevets

(19)

(11) Publication number: **0 226 403 B1**

# EUROPEAN PATENT SPECIFICATION

(45) Date of publication of patent specification: 29.05.91   (51) Int. Cl.⁵: **G11B 7/12, G11B 7/135**

(21) Application number: 86309463.7

(22) Date of filing: 04.12.86

(54) **Optical head apparatus.**

(30) Priority: 04.12.85 JP 274024/85

(43) Date of publication of application:
24.06.87 Bulletin 87/26

(45) Publication of the grant of the patent:
29.05.91 Bulletin 91/22

(84) Designated Contracting States:
DE FR GB

(56) References cited:
DE-A- 3 522 849
US-A- 4 564 269

PATENT ABSTRACTS OF JAPAN, vol. 10, no.
22 (P-424)[2079], 28th January 1986; & JP-
A-60 175 225 (OLYMPUS KOGAKU KOGYO
K.K.) 09-09-1985

PATENT ABSTRACTS OF JAPAN, vol. 2, no.
70, 26th May 1978, page 2620 E 78; & JP-A-53
36 251 (SUWA SEIKOSHA K.K.) 04-04-1978

PATENT ABSTRACTS OF JAPAN, vol. 7, no.
54 , 4th March 1983, page 75 P 180; & JP-A-57
201 201 (MATSUSHITA DENKI SANGYO K.K.)
09-12-1982

(73) Proprietor: **MITSUBISHI DENKI KABUSHIKI KAISHA**
2-3, Marunouchi 2-chome Chiyoda-ku
**Tokyo 100(JP)**

(72) Inventor: **Shikama, Shinsuke Mitsubishi Denki K.K.**
Denshi Shoshin Kaihatsu Kenkyusho 1
**Babazucho**
**Nagaokakyo-shi Kyoto-fu(JP)**
Inventor: **Toide, Eiichi Mitsubishi Denki K.K.**
Denshi Shoshin Kaihatsu Kenkyusho 1
**Babazucho**
**Nagaokakyo-shi Kyoto-fu(JP)**

(74) Representative: **Barnard, Eric Edward et al**
**BROOKES & MARTIN High Holborn House**
**52/54 High Holborn**
**London WC1V 6SE(GB)**

## Description

The present invention relates to optical head apparatus for writing data onto and reading data from a recording medium.

### BACKGROUND OF THE INVENTION

Apparatus and components of the type with which the invention is concerned are described, for example, in the following publications:

(a) Japanese Patent Publication No. JP-A-58-102342

(b) "Modern Optical Engineering", McGraw-Hill, N.Y. 1966

(c) "Technique for Designing a Lens", pp. 35-36 Kogaku Kogyo Gijutsu Kyokai, Japan

(d) "Optics", p. 156, Wiley, New York

(e) "The Present Status of Plastics Lens", Harada, Journal of the Institute of Television Engineers of Japan, Vol. 38, No. 9 (1984), pp. 810-814

(f) Japanese Patent Publication No. JP-A-57-50335

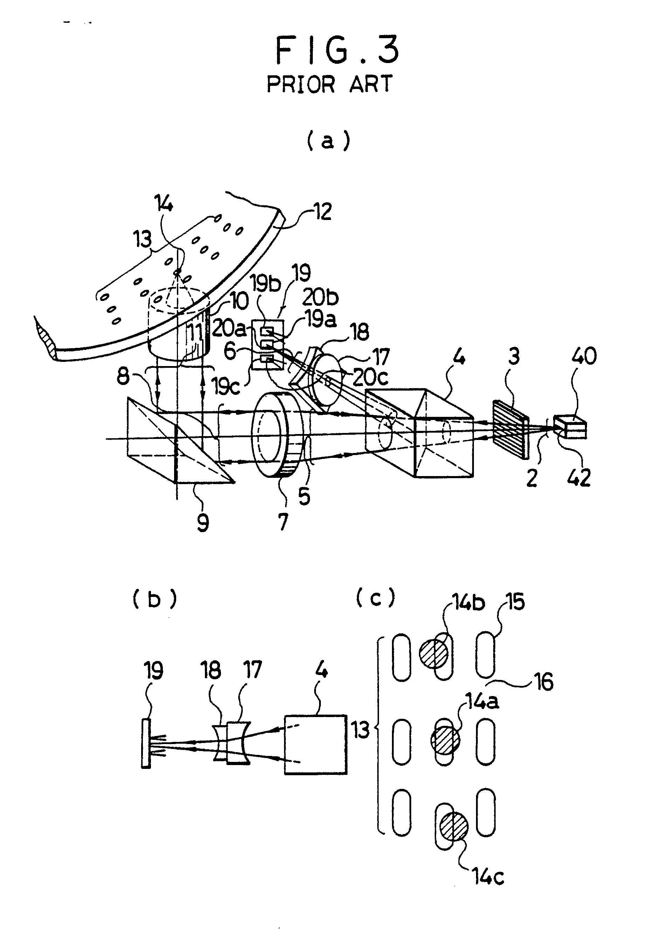

In addition apparatus depicted in Figure 3, and described hereinafter, is known from M. Kondo et al., "An Optical Pickup for the Model MLP-2 Compact Disc Player", "Mitsubishi Denki Giho, 58, 11, pp 4 to 7 (1984).

In recent years, injection moulded plastics lenses have been used as a converging lens in optical head apparatus as the precision in moulding techniques advances. Such lenses can be formed to have aspheric surfaces, if the moulding die is machined by precision NC (numerical controlled) machines. This is in contrast to conventional glass lenses which usually have to be polished individually and which therefore are generally restricted to spherical surfaces. It has therefore been possible to replace a conventional combination of three to five spherical glass lenses by a single aspherical moulded lens.

Because the converging lens of optical head apparatus can be fabricated as a single lens by moulding in mass production, the cost of the optical head apparatus is reduced and its assembly is simplified so that the moulded plastics lenses will be increasingly used in the future.

A serious disadvantage associated with a moulded lens is the lack of uniformity in the aberration characteristics. Other problems are also encountered in the known optical head apparatus as discussed hereinafter.

### SUMMARY OF THE INVENTION

An object of the invention is to provide an improved optical head apparatus having a converging lens formed by moulding.

As is known per se, the invention relates to an optical head apparatus comprising:

a light source for emitting a laser beam with linearly polarized light and

an optical lens or lens system for converging a light beam emitted by the light source onto a recording medium the lens or lens system at least including a lens formed by moulding. In accordance with one aspect of the invention the moulded lens is characterised in the moulded lens having been produced by injecting material into a mould die through an injection gate, and the position of said injection gate being in a predetermined position about the optical axis with regard to the direction of polarization to minimize astigmatism of the system. The adjustment, setting and control of the position of the injection gate of the lens or its position in situ with respect to the direction of linear polarization of the laser beam enables the astigmatism of the overall converging system from the associated light source to a recording medium at least to be reduced.

In some cases, the lens may be set to bring its moulding gate into a position coincident with or parallel to the direction of polarization of the light or to a position where minimal overall astigmatism occurs. In a preferred embodiment, the moulded lens is so orientated that its astigmatism tends to cancel out astigmatism due to other factors. By minimizing astigmatism the invention enables the apparatus to perform at the ideal diffraction limited to optimize the reading and writing of data.

In another aspect the invention provides a method of producing an optical head apparatus which involves the steps of moulding material to form said converging lens whereby the astigmatism of the entire optical system between the light source and the converging lens varies with the rotation of the converging lens about the optical axis; and adjusting the rotary position of the converging lens about the optical axis to minimize the astigmatism of the light beam as converged onto said recording medium.

## BRIEF DESCRIPTION OF THE DRAWINGS

The invention may be understood more readily, and various other features and aspects of the invention may become apparent, from consideration of the following description in conjunction with the accompanying drawings, wherein:-

Fig. I is a diagram showing an optical head apparatus constructed in accordance with the invention;

Fig. 2 is a diagram showing how converging lenses used in apparatuses are set up according to the invention;

Fig. 3 is a diagram showing a conventional optical head apparatus;

Fig. 4 is a graphic representation of data obtained by experiments on the variation in the astigmatism with rotation of a moulded lens;

Fig. 5 is a diagram showing how the astigmatism is produced by a parallel plane plate;

Fig. 6 is a diagram showing how the astigmatism due to image height is produced;

Fig. 7 is a diagram showing a semiconductor laser and explaining the astigmatism of such a semiconductor laser;

Fig. 8 is a diagram showing the relationship between the astigmatic difference and astigmatism;

Fig. 9 is a diagram showing the relationship between the direction of a recording track, the direction of the polarization of the light, and the direction of the gate; and

Fig. I0 is a diagram showing another converging optical system in accordance with the invention.

Fig. 3 depicts a known form of optical head apparatus in which a light source such as a semiconductor laser 40 emits a light beam 2 which is linearly polarized in a direction parallel to its PN junction. A diffraction grating 3 splits the original light beam 2 into three further beams 5. A beam splitter in the form of a semitransparent mirror or half prism 4 directs the beams 5 into further components of the optical system and separates the illuminating light beams 5 from corresponding retro-reflected light beams 6. A collimator lens 7 converts the illuminating light beams 5 emerging from the beam splitter 4 into parallel light pencil beams 8 which are re-directed by a reflection prism 9 as beams II substantially at right angles to the beams 5. A converging lens I0 converges the parallel or pencil light beams II onto an information track I3 of a disk-shaped rotatably driven recording medium or carrier I2 to form corresponding light spots I4a, I4b, I4c as shown at c) in Fig. 3. For this to be achieved, the recording medium I2 is positioned at or close to the focal point of the converging lens I0. The pre-recorded information track I3 consists of pits I5 and lands I6 and the light beam II reflected by the recording medium I2 pass back through the converging lens I0, are re-directed by the prism 9 through the collimator lens 7 and are reflected by the half prism 4 substantially at right angles to the beams 2, 5 as reflected light beams 6. A concave lens I7 reduces the angle of convergence of the reflected light beams 6 and a cylindrical concave lens I8 causes astigmatism in the light beams 6 passed through the concave lens I7. Light detecting means I9 which comprises photo-electric detecting elements I9a to I9c receives the reflected light beams 6.

The central detector I9a receives the light beam reflected from the light spot I4a, and converts the received light into an electrical signal proportional to the intensity of the light. The intensity of the reflected light itself varies depending on whether the light spot I4a is reflected by a pit I5 or a land I6 on the recording track I3. The electrical signal is used to reproduce an audio signal, a video signal, digital data, or the like.

As the recording medium I2 rotates, the surface of the recording medium I2 may vary in position in the direction of optical axis of the object lens I0 because of unevenness, undulation, vibration and the like. Deviation in the direction of the optical axis from the focal point is detected in a known manner (literature (a)) in accordance with the variation in the shape of the light beam received by the central photodetector element I9a, and is corrected by a servo mechanism, not shown, so that the surface of the recording medium I2 is kept at the focal point.

The rotation of the recording medium I2 also causes relative deviation in the lateral sense between the central beam creating the spot I4a and the track I3, due to meandering of track I3 and vibration. To correct the error in the lateral direction, the difference between the outputs of the photodetectors I9b and I9c corresponding to the outer beams creating the spots I4b, I4c is detected and used as a representation of the deviation between the track I3 and the spot I4a and correction is made in accordance with the detected deviation (see the literature (a) mentioned above).

To maximize the density of information stored on the recording medium in such an apparatus, the length of the pits I5 and the track pitch are made as small as possible to allow reading when the optical system from the semiconductor laser to the converging lens l0 is in the ideal state of the diffraction limit. Typically, when the laser wavelength $\lambda = 780$ nm, and the numerical apertures (NA) of the converging lens l0 is NA = 0.5, then the spot diameter obtained by converging at the diffraction limit is about $\lambda/NA = 1.6$ microns. The track pitch is therefore 1.6 microns, while the minimum pit length is 0.8 microns, half the minimum spot diameter.

In order for the converging system to have the characteristic of the ideal diffraction limit, it is required that

(l) the light emitted from the semiconductor laser 40 should be conducted at or close to the state of stigmatism throughout the entire light path passing the converging lens l0 up to the spot l4, and

(2) the semiconductor laser 40 itself does not have any aberration.

As discussed previously it is desirable to fabricate the converging lens l0 as a single moulded, i.e. plastics, lens and Fig. I depicts an optical head apparatus constructed in accordance with the invention which uses such a lens. In Fig. I, the same components and parts have the same reference numerals as Fig. 3.

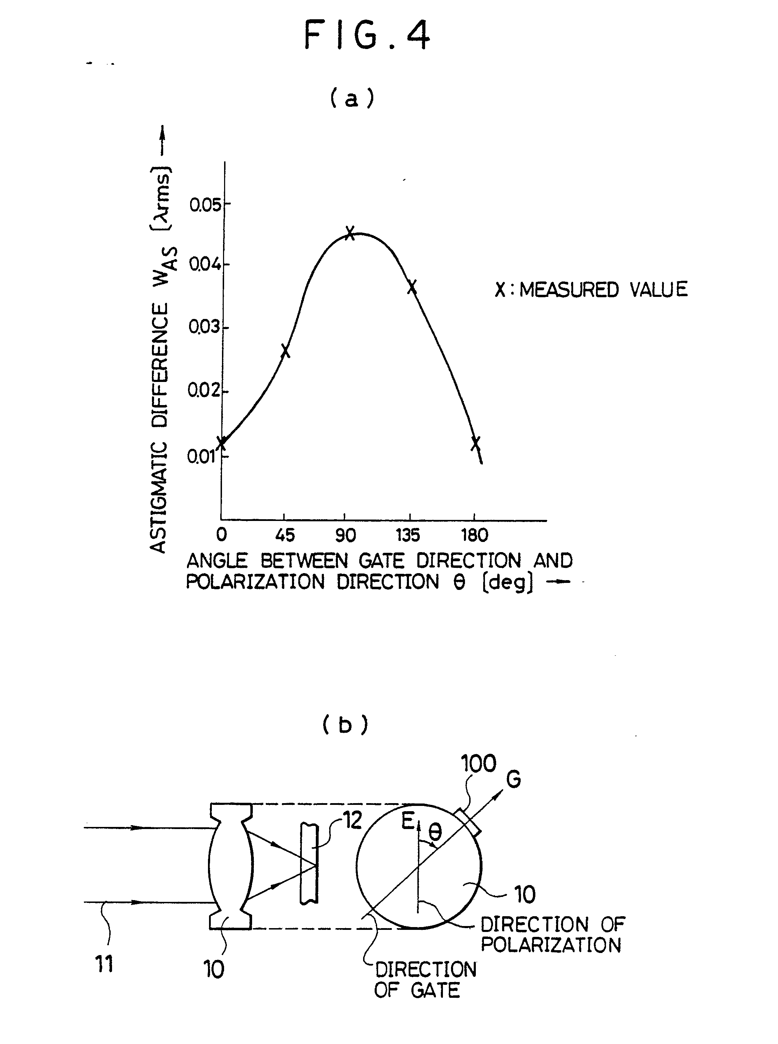

The astigmatism produced by the use of a moulded plastics converging lens l0 will now be discussed in further detail with reference to Fig. 4 which shows measurements of astigmatism in a situation where a linearly polarized parallel light beam ll passes through the lens l0 formed by injection moulding, and is converged on a surface. The plastics material used is PMMA. The lens l0 has a gate l00 through which the plastics material was injected into the moulding die during the injection moulding process. The angle subtended between the line G connecting the gate l00 and the center of the lens l0 and the direction E of the polarization of the incident light is denoted by $\theta$. In Fig. 4a, the vertical axis $W_{AS}$ represents a standard deviation value (hereinafter referred to as rms value) of the astigmatism, expressed in terms of the wavelength $\lambda$ of the light beam and the horizontal axis represents the angle $\theta$. The measurement $W_{AS}$ was made using a Fizeau's interferometer which is common in the measurement of the astigmatism of optical components.

As will be seen from Fig. 4a, $W_{AS}$ is smallest (about $0.0l\lambda$rms) when the direction of the polarization and the direction of the gate coincide with each other, i.e., when $\theta$ is $0°$ and $180°$ while $W_{AS}$ is largest (about $0.045$ $\lambda$rms) when the direction of the polarization and the direction of the gate are at right angles with each other. The same measurements were conducted on l0 workpieces and the results similar to that illustrated were obtained. According to the literature (e), it is inferred that a moulded plastics lens 10 exhibits double refraction due to strain caused by internal residual stress and this is the cause of the variation in the astigmatism.

The conventional apparatus of Figure 3 is also associated with aberration due to three factors. First, the surfaces of the parallel plane optical components such as the diffraction grating 3 and the half prism 4 through which the light beams are transmitted are inclined and not normal with respect to the optical axis of the light beams 2. Secondly, when the point of light emission of the semiconductor laser 40 is off the optical axis of the collimator lens 7, an image height is generated so that astigmatism is generated in the collimated light beams 8. Thirdly, the light emitted from the semiconductor laser 40 itself exhibits astigmatism.

These phenomena will be described in further detail.

(i) Inclination of the diffraction grating 3 and/or the half prism 4.

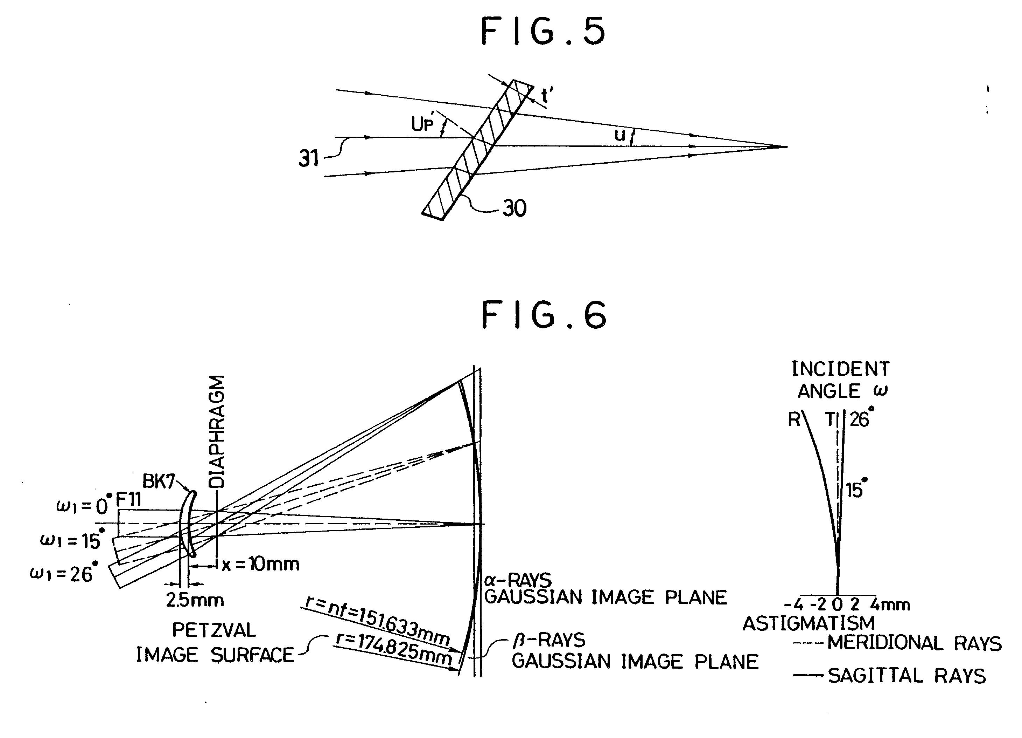

The light beam 2 emitted from the semiconductor laser is divergent when it passes through the components 3,4. Assume that, as shown, in Figure 5, a parallel plane glass 30 with thickness t'and numerical aperture NA = sin u(where u is half the angle of the emergent beam) is disposed in an optical path of a converging light beam, with the parallel plane glass 30 being inclined by Up' with respect to the optical axis 31. The astigmatic difference (astigmatism) which results in such a situation is given by the following equation (I), according to the literature (b).

$$\bar{A}s = \ell s' - \ell t'$$

$$= \frac{t'}{\sqrt{N^2 - \sin^2 Up'}} \left[ \frac{N^2 \cos^2 Up'}{(N^2 - \sin^2 Up')} - 1 \right]$$

$$\cdots (1)$$

4

In the above equation, It' represents the distance to the point of convergence in the surface (meridional surface) containing the normal to the parallel planes of the glass plate 30 and the optical axis, and Is' represents the distance to the point of convergence in the surface (sagittal surface) normal thereto.

If, in Fig. 3, showing the conventional system, the diffraction grating 3 or the half prism 4, which is a parallel plane part, is inclined, an astigmatism in accordance with the equation (I) is produced. For instance, if a diffraction grating with a refraction index N = I.5 and t' = I.5mm, or a half prism with t' = 5mm is inclined by I.0°, the resultant astigmatic difference will be 0.I7 microns or 0.56 microns, respectively.

(ii) Image height due to misalignment of the semiconductor laser.

Generally, when the object (which is the point of light emission of the semiconductor laser) is off the optical axis, and an image height exists, then astigmatism is produced. Fig. 6 shows results of calculation of production of an astigmatism according to literature (c). As shown in the right side of the representation, with increasing image height the point of focusing by the meridional rays and the point of focusing by the sagittal rays are separated from each other and the astigmatism is increased.

As an example, there is a collimator lens fcr use in an optical head apparatus, which produces an astigmatism of I0 microns for the image height corresponding to the incident angle of I°, and there is an object lens for use in an optical head appparatus, which produces an astigmatism of 5 microns for the image height corresponding to the incident angle of I°.

(iii) Astigmatism of the semiconductor laser.

The area of the point of light emission of a semiconductor laser is about 2 microns × 0.I microns, and can be generally regarded as a point.

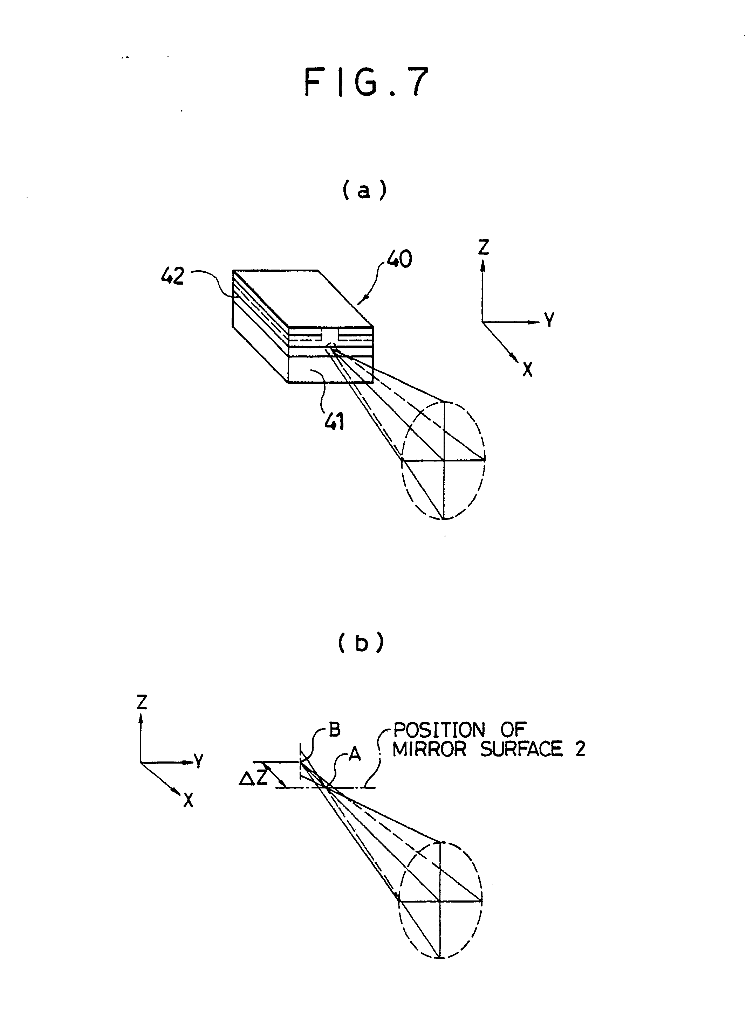

Fig. 7 shows an example of a double hetero-junction semiconductor laser. As shown in Fig. 7 at (a) and (b), the beam waist of the light beam or pencil emitted from the semiconductor laser chip 40 may have different dimensions: the value within the plane (x-y plane) of the junction of the semiconductor and the value within the plane (x-z plane) normal thereto may differ. Especially with gain guiding type semiconductor laser, such a difference is large. Within the normal plane (x-y plane), the point A within the mirror surface 4I forms a mode waist, whereas within the junction plane (x-y plane) the point B in the active layer 42 of the semiconductor laser chip 40, i.e., at the back of the mirror surface 4I forms a mode waist. This difference causes astigmatism. There are certain semiconductor laser chips of the gain guiding type with which the difference may be as large as about 25 microns.

As a criterion for a permissible limit for an optical system accepted as a diffraction limit optical lens, the Marechal's criterion has been used. According to this criterion, the RMS value (Wrms) of the wavefront aberration must be not greater than 0.07 λ: Wrm ≤ 0.07 λ (where λ represents the wavelength of the light).

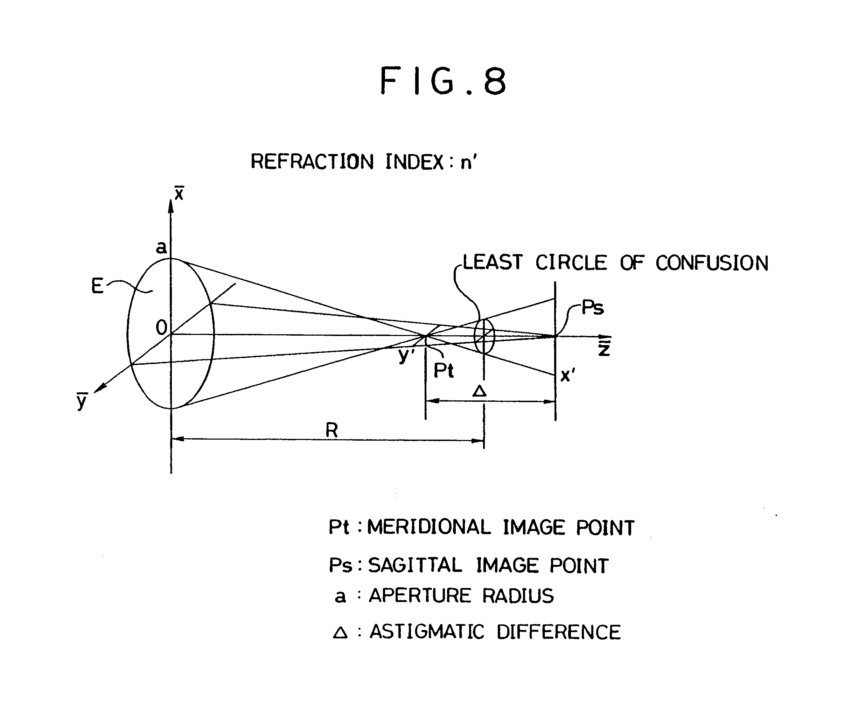

The relationship between the astigmatic differences discussed above in connection with three types of phenomena and the wavefront deviation will be described with reference to Fig. 8.

In Fig. 8, E represents the exit pupil of radius a. The coordinates of the pupil are expressed by (x,y). The x-direction lateral aberration x' at the sagittal image surface Ps is related to the wavefront aberration W as follows:

$$x' = \frac{R}{n'} \frac{\partial W}{\partial x} \qquad \cdots (2)$$

when R >> Δ, i.e., when the astigmatism difference is very small, (as is assumed in fig. 7) the following equation (3) holds):

$$x' = \frac{x}{R} \cdot \Delta \qquad \cdots (3)$$

Combining the equations (2) and (3), x' can be eliminated, and the wavefront aberration W can be given by the following equation (4), if n' is assumed to be I (unity) assuming that surrounding medium is air.

$$W = \int_0^{\overline{x}} \left( \frac{\partial W}{\partial \overline{x}} \right) d\,\overline{x} = \frac{1}{2} \left( \frac{\overline{x}}{R} \right)^2 \Delta \quad \cdots (4)$$

The equation (4) represents the astigmatism coefficient in the Seidel's form. If the value of the equation (4) is converted into the standard deviation Wrms of the wavefront aberration at the least circle of confusion which is the best convergence point, the following equation (5) is obtained.

$$W_{rms} = \frac{1}{4\sqrt{6}} N a^2 \cdot \Delta \quad \cdots (5)$$

Here, Na = a/R, with a representing the radius of the exit pupil as illustrated in Fig. 8.

Thus, if the numerical aperture NA of the system is given, the astigmatic difference $\Delta$ satisfying Wrms $\leq 0.07 \lambda$ is obtained using the equation (5).

For instance, with optical head apparatus for an optical video disc, a collimating lens having Na of about 0.2 and a semiconductor laser having a wavelength of about 0.8 microns is used. In such a case, the permissible astigmatic difference for the W rms $\leq 0.07 \lambda$ is $\lambda \leq 13.7$ microns. The permissible astigmatic difference may be exceeded by the astigmatism due to the phenomena (i), (ii) and (iii) described above, and the converging system as a whole is prevented from functioning as the diffraction limit optical system. Consequentially, the optical transfer function (OTF) deteriorates as does the writing/reading performance.

As has been described, when a plastics lens is used as a converging lens of an optical head apparatus, the plastics lens itself has an astigmatism due to its moulding strain. The value may be as large as 0.045 $\lambda$. This alone may amount to 60% or more of the permissible aberration 0.07 $\lambda$. This has been an obstacle to securing a good writing/reading performance.

In the optical head apparatus constructed in accordance with the invention the astigmatism due to the strain of the plastic and the astigmatism due to defects in the remainder of the optical system is minimized and the converging system from the laser to the recording medium functions optimally as a diffraction limit optical system.

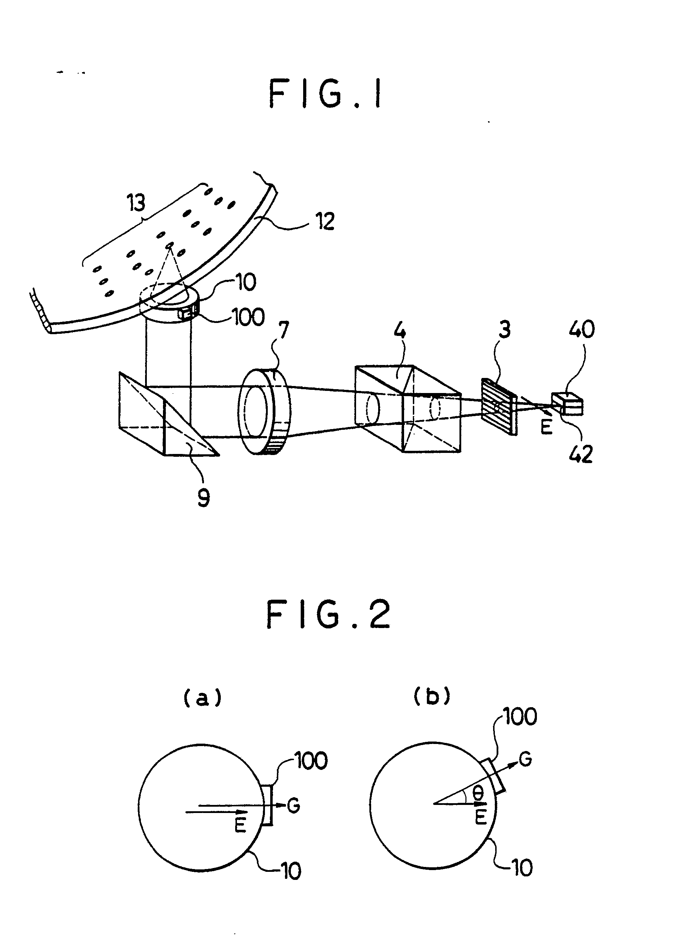

In the Fig. I system the astigmatism of the plastics moulded converging lens I0 is minimized by controlling the position of the moulding gate I00 and rotational position of the lens I0. Let it be assumed firstly that astigmatism due to the phenomena (i), (ii) and (iii) in the optical path from the semiconductor laser 40 to the point just before the converging lens I0 is relatively small, and the light beam entering the converging lens I0 is not considerably inclined with respect to the optical axis of the converging lens I0, and the light convergence is accomplished with a sufficiently small image height relative to the effective field of vision of the lens. Where the astigmatism which is produced under such conditions is about the same as or smaller than the minimum astigmatism due to the internal strain of the converging lens I0 (for example, the astigmatism is not more than about 0.0I $\lambda$rms in the case of the lens shown in Fig. 4), the direction of the gate and the direction of the linear polarization of the light emitted from the semiconductor laser is made to coincide with each other to produce minimal astigmatism. This is illustrated in Fig. 2a, in which the arrow E denotes the direction of the polarization and the arrow G denotes the direction of the gate I00.

In practice, the optimum angle for minimizing the astigmatism of the overall converging system is about $0°$ or about $180°$ and $\theta$ may be adjusted (in the proximity of $0°$ or $180°$) to the exact optimum value.

Now, let us consider a different situation in which the astigmatism due to the phenomena (i), (ii) and (iii) or the image height of the converging lens I0 is large, that is when the astigmatism is larger than the astigmatism which results when the directions E and G are in parallel with each other (i.e., the angle $\theta$ in Fig. 4 is $0°$ or $180°$). In this case, the angle $\theta$ between the directions E and G is varied or adjusted to have such a value that the astigmatism which is due to the internal strain of the converging lens and which is produced at the time of entry of the linearly polarized light and the astigmatism due to the other factors cancel each other or at least minimize the astigmatism of the entire converging system.

In the discussion above, no mention has yet been made to the relationship or relative position between the direction E of the polarization and the direction of extension of the data track. However, as was disclosed in the literature (f), an optical head apparatus with better reproduction characteristics can be obtained if the direction E of the linear polarization (which direction is parallel to the junction surface 42 in the case of a semiconductor laser 40) is at right angles to the direction of the track l3. This is because the angle of the light emission is greater in the direction normal to the junction surface than in the direction parallel to the junction surface.

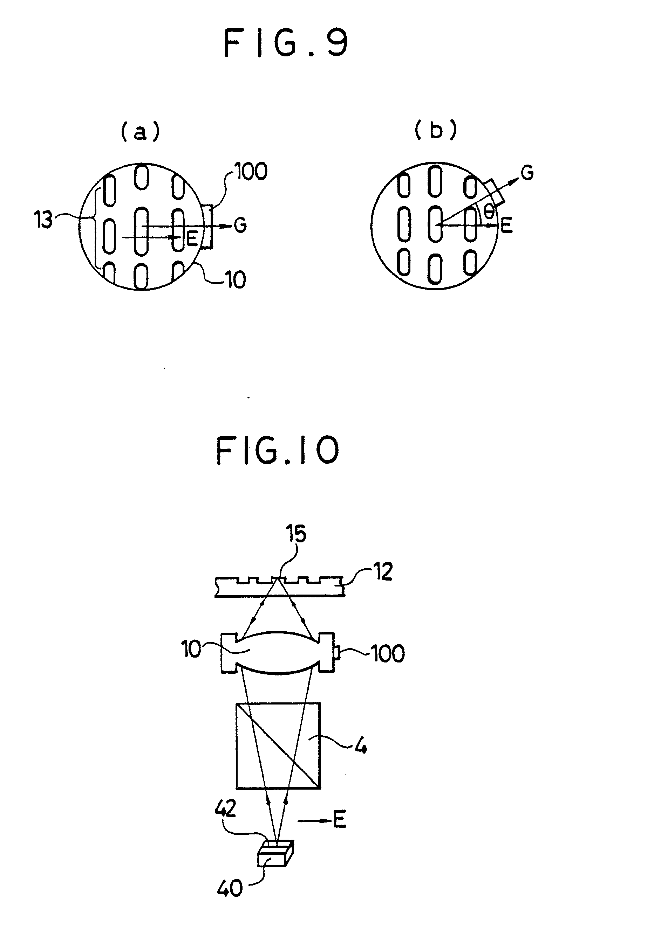

This is applied to the optical head apparatus constructed in accordance with the invention, as depicted in Fig. 9 which shows the relationship between the directions E and G and the direction of the track l3. Where the direction E of the polarization is set at right angles to the direction of the track l3, and where the astigmatism other than that due to the internal strain of the object (converging) lens is small (typically not more than 0.0l λrms as in the embodiment described), the best convergence characteristic is obtained if the direction G of the gate is set parallel with the direction E, as shown in Fig. 9(a). Where the astigmatism is larger, the best convergence characteristic is obtained if the angle θ between the directions E and G is so adjusted that the astigmatism of the overall converging system is minimized.

In the discussion above, the converging lens l0 is assumed to be of an infinite conjugate type (parallel incidence type) but the invention is applicable where the lens l0 is a finite conjugate type is used to directly receive and converge the light emitted from the semiconductor laser 40, as illustrated In Fig. l0.

Although the invention is concerned with moulded lenses formed from plastics the invention can be realized with moulded glass lenses. Precision pressing techniques for glass have advanced in recent years, and glass converging lenses for use in optical head apparatus have been proposed. It is known that these lenses have double refraction due to internal residual stress, although perhaps to a different degree. With these press-formed glass moulded lenses, the angle of rotation about the optical axis of the lens may also be adjusted to minimize the astigmatism of the overall system as with plastics lenses.

## Claims

1. An optical head apparatus comprising:
   a light source (40) for emitting a laser beam with linearly polarized light, and
   an optical lens or lens system (10) for converging a light beam emitted by the light source onto a recording medium (12), the lens or lens system at least including a lens (10) formed by moulding;
   characterised in
   said moulded lens (10) having been produced by injecting a material into a mould die through an injection gate (100), and the position of said injection gate being in a predetermined position about the optical axis with regard to the direction of polarization to minimize astigmatism of the system.

2. An apparatus according to claim 1, wherein the adjustment of the lens position causes the gate (100) to be in a position substantially coincident with the direction of the polarization of the light source.

3. An apparatus according to claim 1, wherein the rotational position of the gate (100) at the time of mounting the lens (10) is set so that the astigmatism of the lens will tend to cancel astigmatism due to other factors.

4. An apparatus according to claim 1, 2 or 3, wherein the moulded lens (10) is made from PMMA.

5. An apparatus according to claim 1, 2 or 3 wherein the moulded lens (10) is formed from glass.

6. An apparatus according to any one of claims 1 to 5, wherein the moulded lens (10) is a non-spherical lens of the infinite conjugate type.

7. An apparatus according to any one of claims 1 to 5, wherein the moulded lens (10) is a non-spherical lens of the finite conjugate type.

8. An apparatus according to any one of claims 1 to 7, wherein the light source (40) is a semiconductor laser.

9. An apparatus according to any one of claims 1 to 8, wherein the direction of the polarization of the laser beam from the light source (40) is substantially perpendicular to tracks (13) on the recording medium (12).

**EP 0 226 403 B1**

10. An apparatus according to any one of claims 1 to 9, and further comprising an optical system including a beam splitter (4) for separating light reflected from the recording medium (12) from light emitted by the light source (40).

11. An apparatus according to claim 1, wherein the direction of a line connecting the injection gate (100) and the centre of the moulded lens (10) is substantially parallel to the direction of the polarization of the light beam entering the moulded lens (10).

12. A method of producing an optical head apparatus of the type having a laser light source (40) for emitting a linearly polarized light beam, and a converging lens (10) for converging the light beam from the laser light source onto information recording tracks (13) on a recording medium (12), said method being characterised by the steps of:

moulding material to form said converging lens (10) whereby the astigmatism of the entire optical system between the light source and the converging lens varies with the rotation of the converging lens about the optical axis; and

adjusting the rotary position of the converging lens (10) about the optical axis to minimize the astigmatism of the light beam as converged onto said recording medium.

13. A method according to claim 12, wherein an optical system serves to guide the light beam emitted by the source (40) to the converging lens and the method further comprises:

adjusting said rotary position such that the astigmatism due to the converging lens (10) and the astigmatism due to said optical system, said laser light source (40) and image height of said converging lens cancel each other.

14. A method according to claim 12 or 13, and further comprising providing a laser light source (40) which is polarized at right angles with the information recording tracks (13).

15. A method according to claim 12, wherein an optical system serves to guide the light beam emitted by the source (40) to the converging lens (10);

said converging lens is moulded by injecting material into a mould die through an injection gate (100) whereby entire optical system between the light source (40) and the converging lens (10) has an astigmatism which varies with the rotation of the converging lens about the optical axis; and

the method further comprises setting the direction of the gate (100) at the time of mounting the converging lens (10) so that the astigmatism due to the converging lens (10) cancels the astigmatism of the light which is emitted from the laser light source (40) and is guided to the point just before the converging lens by the optical system and the astigmatism due to the image height of the light beam which is converged by the converging lens.

**Revendications**

1. Un dispositif de tête optique comprenant:
   - une source lumineuse (40) pour émettre un faisceau laser avec de la lumière polarisée linéairement; et
   - une lentille optique ou système de lentilles (10) pour faire converger un faisceau lumineux émis par la source lumineuse sur un support d'enregistrement (12), la lentille ou le système de lentilles comprenant au moins une lentille (10) formée par moulage;

   caractérisée en ce que

   ladite lentille moulée (10) a été produite en injectant une matière dans une matrice de moulage par une porte d'injection (100), et la position de ladite porte d'injection étant dans une position prédéterminée autour de l'axe optique par rapport à la direction de polarisation de façon à réduire l'astigmatisme du système.

2. Un dispositif selon la revendication 1, dans lequel l'ajustement de la position de la lentille provoque la mise de la porte (100) dans une position pratiquement en coïncidence avec la direction de la polarisation de la source lumineuse.

8

3. Un dispositif selon la revendication 1, dans lequel la position en rotation de la porte (100) au moment du montage de la lentille (10) est choisie de telle sorte que l'astigmatisme de la lentille tendra à annuler l'astigmatisme dû aux autres facteurs.

4. Un dispositif selon la revendication 1, 2 ou 3 dans lequel la lentille moulée (10) est faite en PMMA.

5. Un dispositif selon la revendication 1, 2, ou 3, dans lequel la lentille moulée (10) est fabriquée en verre.

6. Un dispositif selon l'une quelconque des revendications 1 à 5, dans lequel la lentille moulée (10) est une lentille non sphérique du type conjugué à l'infini.

7. Un dispositif selon l'une quelconque des revendications 1 à 5, dans lequel la lentille moulée (10) est une lentille non sphérique du type conjuguée à distance finie.

8. Un dispositif selon l'une quelconque des revendications 1 à 7, dans lequel la source lumineuse (40) est un laser semi-conducteur.

9. Un dispositif selon l'une quelconque des revendications 1 à 8, dans lequel la direction de polarisation du faisceau laser provenant de la source lumineuse (40) est pratiquement perpendiculaire à des pistes (13) du support d'enregistrement (12).

10. Un dispositif selon l'une quelconque des revendications 1 à 9, et comprenant de plus un système optique comportant un diviseur de faisceau (4) pour séparer la lumière réfléchie par le support d'enregistrement (12) de la lumière émise par la source lumineuse (40).

11. Un dispositif selon la revendication 1, dans lequel la direction d'une ligne reliant la porte d'injection (100) au centre de la lentille moulée (10) est pratiquement parallèle à la direction de polarisation du faisceau lumineux entrant dans la lentille moulée (10).

12. Un procédé de production d'un dispositif de tête optique du type ayant une source lumineuse laser (40) pour émettre un faisceau lumineux de polarisation linéaire, et une lentille convergente (10) pour faire converger le faisceau lumineux de la source lumineuse laser sur des pistes d'information d'enregistrement (13) d'un support d'enregistrement (12), ledit procédé étant carctérisé par les étapes de:
- moulage de la matière pour fabriquer ladite lentille convergente (10) de façon que l'astigmatisme du système optique entier entre la source lumineuse et la lentille convergente varie avec la rotation de la lentille convergente autour de l'axe optique; et,
- ajustement de la position en rotation de la lentille convergente (10) autour de l'axe optique pour minimiser l'astigmatisme du faisceau lumineux convergent sur ledit support d'enregistrement.

13. Un procédé selon la revendication 12, dans lequel un système optique sert à guider le faisceau lumineux émis par la source (40) vers la lentille convergente et le procédé comprend de plus:

une étape d'ajustage de ladite position en rotation de telle sorte que l'astigmatisme dû à la lentille convergente (10) et l'astigmatisme dû audit système optique, à ladite source lumineuse laser (40) et à la hauteur d'image de ladite lentille convergente s'annulent les uns les autres.

14. Un procédé selon la revendication 12 ou 13, et comprenant de plus une étape fournissant une source lumineuse laser (40) qui est polarisée à angle droit avec les pistes (13) d'enregistrement de l'information.

15. Un procédé selon la revendication 12, dans lequel un système optique sert à guider le faisceau lumineux émis par la source (40) vers la lentille convergente (10); ladite lentille convergente est moulée en injectant une matière dans une matrice de moulage à travers une porte d'injection (100), de sorte que le système optique entier entre la source lumineuse (40) et la lentille convergente (10) présente un astigmatisme qui varie avec la rotation de la lentille convergente autour de l'axe optique; et

le procédé comprend de plus le réglage de la direction de la porte (100) au moment du montage de la lentille convergente (10) de telle sorte que l'astigmatisme dû à la lentille convergente (10) annule l'astigmatisme de la lumière qui est émise par la source lumineuse laser (40) et est guidée par le système optique sur le point juste avant la lentille convergente et l'astigmatisme dû à la hauteur d'image du faisceau lumineux que fait converger la lentille convergente.

## Ansprüche

1.  Optische Kopfeinrichtung, aufweisend:
    eine Lichtquelle (40) zum Aussenden eines Laserstrahls mit linear polarisiertem Licht und
    eine optische Linse oder Linsensystem (10) zum Konvergieren eines von der Lichtquelle ausgesendeten Lichtstrahls auf ein Aufzeichnungsmedium (12), wobei die Linse oder das Linsensystem zumindest eine durch Gießen ausgebildete Linse (10) umfaßt;
    **dadurch gekennzeichnet,**
    daß die gegossene Linse (10) hergestellt worden ist, indem ein Material über einen Spritzanguß (100) in eine Gießform gespritzt wurde, und die Position des Spritzangusses in einer vorbestimmten Lage um die optische Achse mit Bezug auf die Polarisationsrichtung zur Minimierung vom Astigmatismus des Systems liegt.

2.  Einrichtung nach Anspruch 1, in welcher die Einstellung der Linsenposition bewirkt, daß der Anguß (100) in einer im wesentlichen mit der Polarisationsrichtung der Lichtquelle koinzidierenden Position liegt.

3.  Einrichtung nach Anspruch 1, in welcher die Rotationslage des Angusses (100) zum Zeitpunkt der Anbringung der Linse (10) so festgelegt wird, daß der Astigmatismus der Linse darauf abzielt, Astigmatismus infolge anderer Faktoren auszulöschen.

4.  Einrichtung nach Anspruch 1, 2 oder 3, in welcher die zum Guß geformte Linse (10) aus PMMA hergestellt ist.

5.  Einrichtung nach Anspruch 1, 2 oder 3, in welcher die zum Guß geformte Linse (10) aus Glas hergestellt ist.

6.  Einrichtung nach einem der Ansprüche 1 bis 5, in welcher die zum Guß geformte Linse (10) eine nichtsphärische Linse der Art unendlich konjugiert ist.

7.  Einrichtung nach einem der Ansprüche 1 bis 5, in welcher die zum Guß geformte Linse (10) eine nichtsphärische Linse der Art endlich konjugiert ist.

8.  Einrichtung nach einem der Ansprüche 1 bis 7, in welcher die Lichtquelle (40) ein Halbleiterlaser ist.

9.  Einrichtung nach einem der Ansprüche 1 bis 8, in welcher die Polarisationsrichtung des Laserstrahls von der Lichtquele (40) im wesentlichen senkrecht zu den Spuren (13) auf dem Aufzeichnungsmedium (12) liegt.

10.  Einrichtung nach einem der Ansprüche 1 bis 9 und ferner aufweisend ein optisches System, welches einen Strahlteiler (4) zum Trennen von am Aufzeichnungsmedium (12) reflektiertem Licht von von der Lichtquelle (40) ausgesendetem Licht umfaßt.

11.  Einrichtung nach Anspruch 1, in welcher die Richtung einer den Spritzanguß (100) und das Zentrum der zum Guß geformten Linse (10) verbindenden Linie im wesentlichen parallel zur Polarisationsrichtung des in die zum Guß geformte Linse (10) eintretenden Lichtstrahls liegt.

12.  Verfahren zum Herstellen einer optischen Kopfeinrichtung der Art, die eine Laserlichtquelle (40) zum Aussenden eines linear polarisierten Lichtstrahls und eine konvergierenden Linse (10) aufweist, die den Lichtstrahl von der Laserlichtquelle auf Informationsaufzeichnungsspuren (13) auf einem Aufzeichnungsmedium (12) konvergiert, welches Verfahren durch die Schritte gekennzeichnet ist:
    Gießen von Material zur Ausbildung der konvergierenden Linse (10), wobei der Astigmatismus der gesamten optischen Einrichtung zwischen der Lichtquelle und der konvergierenden Linse mit der Rotation der konvergierenden Linse um die optische Achse variiert; und

Justieren der Rotationslage der konvergierenden Linse (10) um die optische Achse zur Minimierung vom Astigmatismus des Lichtstrahls, wenn dieser auf das Aufzeichnungsmedium konvergiert.

13. Verfahren nach Anspruch 12, in welchem ein optisches System dazu dient, den von der Quelle (40) ausgesandten Lichtstrahl auf die konvergierende Linse zu leiten, und das Verfahren ferner umfaßt:

die Justierung der Rotationslage derart, daß der Astigmatismus infolge der konvergierenden Linse (10) und der Astigmatismus infolge des optischen Systems, der Laserlichtquelle (40) und Bildhöhe der konvergierenden Linse einander auslöschen.

14. Verfahren nach Anspruch 12 oder 13 und ferner die Bereitstellung einer Laserlichtquelle (40) umfassend, die unter rechten Winkeln bezüglich der Informationsaufzeichnungsspuren (13) polarisiert ist.

15. Verfahren nach Anspruch 12, in welchem ein optisches System dazu dient, den von der Lichtquelle (40) ausgesandten Lichtstrahl auf die konvergierende Linse (10) zu leiten;

die konvergierende Linse gegossen wird, indem Material durch einen Spritzanguß (100) in eine Gießform gespritzt wird, wodurch das gesamte optische System zwischen der Lichtquelle (40) und der konvergierenden Linse (10) einen Astigmatismus aufweist, der mit der Rotation der konvergierenden Linse um die optische Achse variiert; und

das Verfahren ferner umfaßt, die Richtung des Angusses (100) zum Zeitpunkt des Einbaus der konvergierenden Linse (10) derart festzulegen, daß der Astigmatismus infolge der konvergierenden Linse (10) den Astigmatismus des Lichts, das von der Laserlichtquelle (40) ausgesendet wird und mittels des optischen Systems zum Punkt unmittelbar vor der konvergierenden Linse geleitet wird, und den Astigmatismus infolge der Bildhöhe des Lichtstrahls, der von der konvergierenden Linse konvergiert wird, auslöscht.

# FIG.1

# FIG.2

(a)

(b)

# FIG.3
## PRIOR ART

### (a)

### (b)

### (c)

# FIG.4

## (a)

X : MEASURED VALUE

ASTIGMATIC DIFFERENCE $W_{AS}$ [λrms] →

ANGLE BETWEEN GATE DIRECTION AND
POLARIZATION DIRECTION θ [deg] →

## (b)

# FIG.5

# FIG.6

EP 0 226 403 B1

EP 0 226 403 B1

# FIG.7

## (a)

## (b)

POSITION OF
MIRROR SURFACE 2

16

# FIG.8

REFRACTION INDEX : n'

Pt : MERIDIONAL IMAGE POINT

Ps : SAGITTAL IMAGE POINT

a : APERTURE RADIUS

$\triangle$ : ASTIGMATIC DIFFERENCE

EP 0 226 403 B1

# F I G. 9

(a)

(b)

# FIG.10